# EUROPEAN PATENT APPLICATION

(11) **EP 4 776 261 A1**
(43) Date of publication of application: **15.07.2026**
(21) Application number: 25867245.0
(22) Date of filing: 07.11.2025
(51) Int. Cl.: G09B 9/00

(54) **LEARNING SYSTEM FOR MANUFACTURING SECONDARY BATTERY AND LEARNING METHOD FOR MANUFACTURING SECONDARY BATTERY**

(30) Priority: 20.11.2024 KR 20240165885
(71) Applicant: LG ENERGY SOLUTION, LTD., Seoul 07335 (KR)
(72) Inventor: KIM, Yong Nam, Daejeon 34122 (KR); JUNG, Gi Teck, Daejeon 34122 (KR)
(74) Representative: BCKIP Part mbB
(86) International application number: PCT/KR2025/018259
(87) International publication number: WO 2026/111270

(57) **Abstract**

The inventive concept of the present disclosure provides a learning system for secondary battery manufacturing, including: a simulation device configured to construct a virtual factory in which a plurality of manufacturing equipment configured to perform secondary battery manufacturing processes are disposed, and to output the virtual factory to a display device; and an input device configured to transmit a user input signal generated based on an input of a user to the simulation device, wherein the simulation device is configured to change a position of the virtual factory displayed on the display device in accordance with the user input signal, and to output, to the display device, content associated with a manufacturing equipment selected by the user input signal from among the plurality of manufacturing equipment.

## Description

### [Technical Field]

The present disclosure relates to a learning system for secondary battery manufacturing and a learning method for secondary battery manufacturing.

This application claims the benefit of Korean Patent Application No. 10-2024-0165885, filed on November 20, 2024, the disclosure of which is incorporated herein by reference.

### [Background]

Unlike primary batteries, secondary batteries are capable of repeated charge and discharge cycles. Secondary batteries are widely used as energy sources for various wireless devices such as handsets, laptops, and cordless vacuum cleaners. Recently, due to improvements in energy density and economies of scale, the manufacturing cost per unit capacity of secondary batteries has decreased dramatically. As the market for electric vehicles and Energy Storage Systems (ESS) utilizing secondary batteries continues to grow, demand for secondary batteries has increased rapidly. In response to this growing demand, research into secondary battery manufacturing processes has become increasingly active, and these processes are evolving rapidly. Accordingly, there is a growing need for effective training solutions for operators who work with the equipment that performs secondary battery manufacturing processes.

### [Summary]

### [Technical Problem]

The technical problem to be solved by the inventive concept of the present disclosure is to provide a learning system for secondary battery manufacturing and a learning method for secondary battery manufacturing.

### [Technical Solution]

To solve the above-described problem, the inventive concept of the present disclosure provides a learning system for secondary battery manufacturing, including: a simulation device configured to construct a virtual factory in which a plurality of manufacturing equipment configured to perform secondary battery manufacturing processes are disposed, and to output the virtual factory to a display device; and an input device configured to transmit a user input signal generated based on an input of a user to the simulation device, wherein the simulation device is configured to change a position of the virtual factory displayed on the display device in accordance with the user input signal, and to output, to the display device, content associated with a manufacturing equipment selected by the user input signal from among the plurality of manufacturing equipment.

In exemplary aspects, the simulation device is configured to instantiate, on a screen of the display device, an operation icon that moves in accordance with the user input signal, the simulation device provides a Free mode and a Normal mode, wherein in the Free mode, the simulation device is configured to allow the operation icon moving in accordance with the user input signal to approach all of the plurality of manufacturing equipment, to display, on the screen of the display device, an identification tag of a manufacturing equipment that the operation icon has approached when the operation icon approaches any one of the plurality of manufacturing equipment, and to output, to the display device, content associated with the manufacturing equipment selected by the user input signal from among the plurality of manufacturing equipment, and in the Normal mode, the simulation device is configured to output a plurality of contents associated with the plurality of manufacturing equipment to the display device in a predetermined order.

In exemplary aspects, the content for the manufacturing equipment selected from among the plurality of manufacturing equipment is configured to output, to the display device, a video of a Human-Machine Interface (HMI) for inputting process parameters related to the operation of the manufacturing equipment.

In exemplary aspects, the plurality of manufacturing equipment is configured to cooperate with one another to perform a manufacturing process for a jelly-roll type electrode assembly, and the simulation device includes a content storing part that stores a plurality of contents associated with the plurality of manufacturing equipment, and is configured to execute content associated with the manufacturing equipment selected by the user input signal from among the plurality of manufacturing equipment.

In exemplary aspects, the plurality of contents includes content for an electrode supply equipment configured to load a first electrode onto a first unwinder and load a second electrode onto a second unwinder.

In exemplary aspects, the plurality of contents includes content for a notching equipment configured to form a plurality of first electrode tabs in a non-coated part of the first electrode and form a plurality of second electrode tabs in a non-coated part of the second electrode.

In exemplary aspects, the plurality of contents includes content for a vision inspection equipment configured to inspect the appearance of the first electrode having the plurality of first electrode tabs and to inspect the appearance of the second electrode having the plurality of second electrode tabs.

In exemplary aspects, the plurality of contents includes content for a separator supply equipment configured to load a first separator onto a third unwinder and load a second separator onto a fourth unwinder.

In exemplary aspects, the plurality of contents includes content for a winding equipment configured to wind a laminate in which a first electrode having a plurality of first electrode tabs, a first separator, a second electrode having a plurality of second electrode tabs, and a second separator are stacked in sequence, thereby manufacturing a jelly-roll type electrode assembly.

In exemplary aspects, the plurality of contents includes content for a taping equipment configured to attach a tape to an outer surface of a jelly-roll type electrode assembly in which a laminate comprising a first electrode having a plurality of first electrode tabs, a first separator, a second electrode having a plurality of second electrode tabs, and a second separator stacked in sequence has been wound.

In exemplary aspects, the plurality of content contents includes content for an unloading equipment configured to load a jelly-roll type electrode assembly - in which a laminate comprising a first electrode having a plurality of first electrode tabs, a first separator, a second electrode having a plurality of second electrode tabs, and a second separator stacked in sequence has been wound - onto a tray.

In exemplary aspects, the simulation device provides a plurality of contents associated with the plurality of manufacturing equipment, wherein the plurality of contents includes: content for an electrode supply equipment configured to load a first electrode onto a first unwinder and load a second electrode onto a second unwinder; content for a notching equipment configured to form a plurality of first electrode tabs in a non-coated part of the first electrode and form a plurality of second electrode tabs in a non-coated part of the second electrode; content for a vision inspection equipment configured to inspect the appearance of the first electrode having the plurality of first electrode tabs and to inspect the appearance of the second electrode having the plurality of second electrode tabs; content for a separator supply equipment configured to load a first separator onto a third unwinder and load a second separator onto a fourth unwinder; content for a winding equipment configured to wind a laminate in which the first electrode having the plurality of first electrode tabs, the first separator, the second electrode having the plurality of second electrode tabs, and the second separator are stacked in sequence, thereby manufacturing a jelly-roll type electrode assembly; content for a taping equipment configured to attach a tape to an outer surface of the jelly-roll type electrode assembly; and content for an unloading equipment configured to load the jelly-roll type electrode assembly onto a tray, wherein the simulation device provides a Free mode and a Normal mode, wherein in the Free mode, the simulation device is configured to output, to the display device, content selected by the user input signal from among the plurality of contents, and in the Normal mode, the simulation device is configured to output the plurality of contents to the display device in a predetermined order.

In exemplary aspects, the simulation device includes a memory configured to store at least one instruction, and a processor configured to execute the at least one instruction stored in the memory.

To solve the above-described problem, the inventive concept of the present disclosure provides a learning method for secondary battery manufacturing, including: executing a simulation device to output, to a display device, a virtual factory in which a plurality of manufacturing equipment configured to perform secondary battery manufacturing processes are disposed; and conducting learning on the plurality of manufacturing equipment based on a user input signal generated based on an input of a user, wherein conducting learning includes: changing a position of the virtual factory displayed on the display device in accordance with the user input signal; and outputting, to the display device, content associated with a manufacturing equipment selected by the user input signal from among the plurality of manufacturing equipment.

In exemplary aspects, the learning method for secondary battery manufacturing further includes: selecting either the Free mode or the Normal mode, wherein in the Free mode, the simulation device is configured to allow an operation icon moving on the screen of the display device in accordance with the user input signal to approach all of the plurality of manufacturing equipment, to display, on the screen of the display device, an identification tag of a manufacturing equipment that the operation icon has approached when the operation icon approaches any one of the plurality of manufacturing equipment, and to output, to the display device, content associated with the manufacturing equipment selected by the user input signal from among the plurality of manufacturing equipment, and in the Normal mode, the simulation device is configured to output a plurality of contents associated with the plurality of manufacturing equipment to the display device in a predetermined order.

In exemplary aspects, the simulation device provides a plurality of contents associated with the plurality of manufacturing equipment, wherein the plurality of contents includes: content for an electrode supply equipment configured to load a first electrode onto a first unwinder and load a second electrode onto a second unwinder; content for a notching equipment configured to form a plurality of first electrode tabs in a non-coated part of the first electrode and form a plurality of second electrode tabs in a non-coated part of the second electrode; content for a vision inspection equipment configured to inspect the appearance of the first electrode having the plurality of first electrode tabs and to inspect the appearance of the second electrode having the plurality of second electrode tabs; content for a separator supply equipment configured to load a first separator onto a third unwinder and load a second separator onto a fourth unwinder; content for a winding equipment configured to wind a laminate in which the first electrode having the plurality of first electrode tabs, the first separator, the second electrode having the plurality of second electrode tabs, and the second separator are stacked in sequence, thereby manufacturing a jelly-roll type electrode assembly; content for a taping equipment configured to attach a tape to an outer surface of the jelly-roll type electrode assembly; and content for an unloading equipment configured to load the jelly-roll type electrode assembly onto a tray.

### [Advantageous Effects]

According to the learning system for secondary battery manufacturing in exemplary aspects, the Free mode of the simulation device can provide a virtual environment in which the user can freely move within the virtual factory - where the manufacturing equipment are installed - and actively experience and learn about the manufacturing equipment. In the Free mode of the simulation device, the user can selectively and intensively study content associated with manufacturing equipment of interest, thereby improving learning efficiency.

According to the learning system for secondary battery manufacturing in exemplary aspects, the simulation device can construct, in the virtual factory, a plurality of manufacturing equipment configured to perform the manufacturing process for the jelly-roll type electrode assembly, and can provide a virtual environment in which the user can freely move within the virtual factory and actively experience and learn about the manufacturing equipment. In the Free mode of the simulation device, the user can selectively and intensively study content associated with manufacturing equipment of interest, thereby improving learning efficiency with respect to the manufacturing process for the jelly-roll type electrode assembly.

The effects that can be obtained from the exemplary aspects of the present disclosure are not limited to the effects mentioned above, and other effects not mentioned can be clearly derived and understood by one having ordinary knowledge in the technical field to which the exemplary aspects of the present disclosure belong from the following description. In other words, unintended effects of practicing the exemplary aspects of the present disclosure can also be derived from the exemplary aspects of the present disclosure by one having ordinary knowledge in the technical field.

### [Brief Description of the Drawings]

FIG. 1 is a block diagram illustrating a learning system for secondary battery manufacturing according to exemplary aspects.
FIG. 2 is a schematic diagram schematically illustrating the learning system for secondary battery manufacturing according to exemplary aspects.
FIG. 3 is a diagram exemplarily illustrating a screen of a display device on which a virtual factory having a plurality of manufacturing equipment constructed therein is displayed, in the learning system for secondary batteries according to exemplary aspects.
FIG. 4 is a diagram exemplarily illustrating a screen of a display device provided for determining a learning mode, in the learning system for secondary battery manufacturing according to exemplary aspects.
FIG. 5 is a diagram exemplarily illustrating a screen of a display device displaying an HMI associated with manufacturing equipment, in the learning system for secondary battery manufacturing according to exemplary aspects.
FIG. 6 is a configuration diagram schematically illustrating a virtual factory constructed by a simulation device of the learning system for secondary battery manufacturing according to exemplary aspects.
FIGS. 7 to 14 are diagrams for explaining contents provided by the simulation device of the learning system for secondary battery manufacturing.
FIG. 15 is a flowchart illustrating a learning method for secondary battery manufacturing according to exemplary aspects.
FIG. 16 is a block diagram illustrating an exemplary computing device constituting the learning system for secondary battery manufacturing according to exemplary aspects.

### [Best Mode for Carrying out the Invention]

Hereinafter, preferred aspects of the present disclosure will be described in detail with reference to the accompanying drawings. Prior to this, the terms or words used in the specification and claims should not be interpreted as being limited to conventional or dictionary meanings, and should be interpreted as having meanings and concepts consistent with the technical spirit of the present disclosure, based on the principle that the inventor may appropriately define the concept of terms in order to best describe his or her own invention.

Therefore, since the aspects described in the specification and the configurations shown in the drawings are only the most preferred aspects of the present disclosure and do not represent all of the technical spirit of the present disclosure, it should be understood that there may be various equivalents and modifications that can replace them at the time of filing of this application.

In addition, in the course of describing the present disclosure, if a detailed description of a related known configuration or function is deemed likely to obscure the gist of the present disclosure, the detailed description thereof will be omitted.

Since the aspects of the present disclosure are provided to more completely describe the resent disclosure to a person of ordinary skill in the art, the shapes and sizes of components in the drawings may be exaggerated, omitted, or schematically illustrated for a clearer description. Therefore, the size or ratio of each component does not entirely reflect the actual size or ratio.

In the present disclosure, a secondary battery may refer to a battery made using a material in which the oxidation-reduction process between current and substances can be repeated multiple times. For example, to produce a secondary battery, processes such as mixing, coating, roll pressing, slitting, notching, assembling, packaging, charge/discharge cycling, degassing, and characteristic inspection may be performed. In this case, separate manufacturing equipment may be used to perform each process. Each manufacturing equipment may operate according to process parameters and setting values that are configured or changed by the user.

In the present disclosure, the user may refer to an operator who performs secondary battery manufacturing and operates secondary battery manufacturing equipment, and may include a user who is learning through the learning system for secondary battery manufacturing.

In the present disclosure, manufacturing equipment provided in the learning system for secondary battery manufacturing may refer to a virtual device that instantiates or reproduces, in a virtual space, actual secondary battery manufacturing equipment configured to perform secondary battery manufacturing processes. For example, the plurality of manufacturing equipment provided in the learning system for secondary battery manufacturing may correspond to actual manufacturing equipment for cooperatively performing secondary battery manufacturing processes, and each piece of manufacturing equipment may perform one of the plurality of processes constituting the secondary battery manufacturing process. In the present disclosure, content may include images, videos, animations, and the like relating to the operation of manufacturing equipment and articles processed by the manufacturing equipment.

### (First aspect)

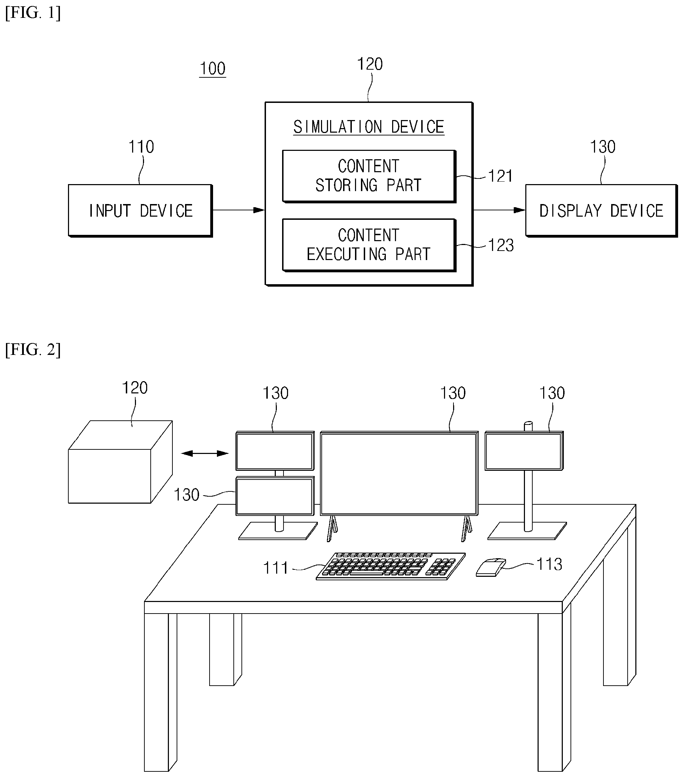

FIG. 1 is a block diagram illustrating a learning system 100 for secondary battery manufacturing according to exemplary aspects. FIG. 2 is a schematic diagram schematically illustrating the learning system 100 for secondary battery manufacturing according to exemplary aspects.

Referring to FIGS. 1 and 2, the learning system 100 for secondary battery manufacturing can provide simulation-based content on secondary battery manufacturing processes to users. The learning system 100 for secondary battery manufacturing can provide users with content on secondary battery manufacturing equipment configured to perform secondary battery manufacturing processes, and users can learn through the content about the processes performed by the manufacturing equipment, how to use the manufacturing equipment, countermeasures in the event of malfunction of the manufacturing equipment, or quality degradation of articles processed by the manufacturing equipment.

The learning system 100 for secondary battery manufacturing may include an input device 110, a simulation device 120, and a display device 130. The input device 110, the simulation device 120, and the display device 130 may be communicatively connected to one another.

The input device 110 may be provided for user input. The input device 110 can generate a user input signal based on the input of the user, and transmit the user input signal to the simulation device 120. A user input signal may refer to a signal generated by an input of a user or manipulation on the input device 110 provided for user input or manipulation. The input device 110 is an input means provided for user manipulation and input, and may include, for example, a keyboard 111 and a mouse 113.

The simulation device 120 can construct a virtual factory in which a plurality of manufacturing equipment are disposed in a three-dimensional virtual space, and output the virtual factory including the plurality of manufacturing equipment to the display device 130. Each of the plurality of manufacturing equipment may correspond to actual secondary battery manufacturing equipment. The simulation device 120 can construct the virtual factory including the plurality of manufacturing equipment based on pre-stored data or data input by the user. The simulation device 120 can provide a virtual environment in which the user can freely move within the virtual factory from a first-person perspective and experience and learn about the plurality of manufacturing equipment in the virtual factory.

The simulation device 120 may include a content storing part 121 and a content executing part 123.

The content storing part 121 can store a plurality of contents associated with the plurality of manufacturing equipment. Each content may correspond to each piece of manufacturing equipment. The plurality of contents associated with the plurality of manufacturing equipment may be generated based on pre-stored or user-input data on actual manufacturing equipment and on an actual factory in which the actual manufacturing equipment are installed. Content associated with a specific piece of manufacturing equipment may be an instantiation or reproduction, in a three-dimensional virtual space, of the operation of the corresponding actual manufacturing equipment. Content associated with a specific piece of manufacturing equipment may include images, videos, animations, and the like relating to the operation of a specific production facility.

The content executing part 123 can execute a plurality of contents stored in the content storing part 121. The content executing part 123 can execute content determined or selected according to a user input signal from among a plurality of contents, and output the corresponding content to the display device 130.

The learning system 100 for secondary batteries may include at least one display device 130. In exemplary aspects, the learning system 100 for secondary battery manufacturing may include a plurality of display devices 130. The plurality of display devices 130 may include a monitor displaying the virtual factory in which the plurality of manufacturing equipment are disposed and/or content executed by the simulation device 120, a monitor displaying quality information of articles processed by the plurality of manufacturing equipment, a monitor displaying an HMI (Human-Machine Interface) screen for control of the plurality of manufacturing equipment, and the like.

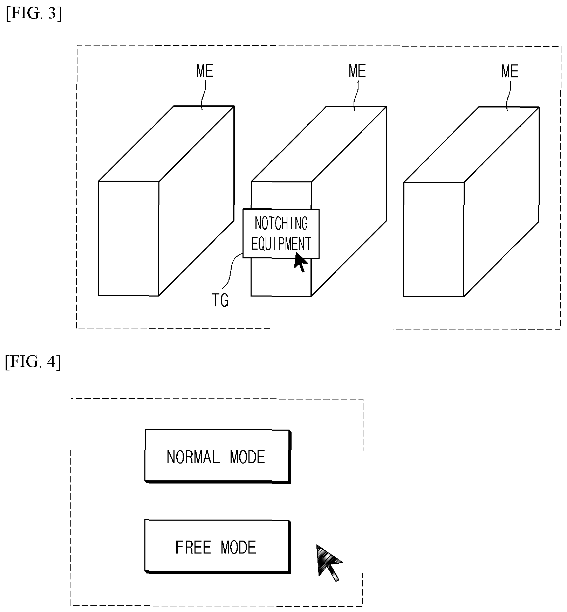

FIG. 3 is a diagram exemplarily illustrating a screen of the display device 130 on which a virtual factory having a plurality of manufacturing equipment (ME) constructed therein is displayed, in the learning system 100 for secondary batteries according to exemplary aspects.

Referring to FIGS. 1 to 3, the simulation device 120 may be configured to instantiate, on the screen of the display device 130, an operation icon that moves in accordance with the user input signal. In FIG. 3, the operation icon is exemplified as being in the form of a mouse cursor, but is not limited thereto. For example, the operation icon may be instantiated as an operator's hand or as an operator figure.

The simulation device 120 can adjust the position of the virtual factory displayed on the display device 130 in accordance with the user input signal. That is, the user can manipulate the input device to move the operation icon and, by moving the operation icon, change the position of the virtual factory displayed on the display device 130. The simulation device 120 can allow the operation icon moving in accordance with the user input signal to approach the manufacturing equipment (ME) constructed in the virtual factory, and can instantiate, on the display device 130, the area within the virtual factory corresponding to the position of the operation icon. For example, the user can manipulate the arrow keys of the keyboard 111 or move the mouse 113 to move the operation icon and change the area within the virtual space displayed on the display device 130. The simulation device 120 can provide a zoom-in function and a zoom-out function. For example, in accordance with a user input signal generated by scrolling the mouse 113, the zoom-in and zoom-out functions can be executed in the simulation device 120. The user can utilize the zoom-in function to enlarge and examine in detail a specific area within the virtual factory or a manufacturing equipment (ME) of interest.

The user can move the operation icon to a manufacturing equipment (ME) of interest among the manufacturing equipment (ME) constructed in the virtual factory to carry out learning on the manufacturing equipment (ME) of interest. When the operation icon moving in accordance with the user input signal is positioned near a specific manufacturing equipment (ME) in the virtual factory, the simulation device 120 can display a pop-up of the identification tag (TG) of the manufacturing equipment (ME) on the display device 130. When the user selects the identification tag (TG) of the manufacturing equipment (ME), the simulation device 120 can execute content associated with the manufacturing equipment (ME). For example, in response to a user input signal generated by the user clicking the identification tag (TG) of the manufacturing equipment (ME) with the mouse 113, the simulation device 120 can execute content associated with the manufacturing equipment (ME).

FIG. 4 is a diagram exemplarily illustrating a screen of the display device 130 provided for determining a learning mode, in the learning system 100 for secondary battery manufacturing according to exemplary aspects.

Referring to FIGS. 1 to 4, the simulation device 120 may include a learning mode including a free mode and a normal mode.

In the normal mode, the simulation device 120 can execute a plurality of contents associated with the plurality of manufacturing equipment (ME) in a predetermined order.

In the free mode, the simulation device 120 can allow the operation icon moving in accordance with the user input signal to freely move within the virtual factory, and can output to the display device 130 content associated with the manufacturing equipment (ME) selected by the user input signal from among the plurality of manufacturing equipment (ME). In the free mode, the simulation device 120 can allow the operation icon to approach all of the plurality of virtual manufacturing equipment (ME). In the free mode, the user can manipulate the input device 110 to freely move within the virtual factory and select a manufacturing equipment (ME) of interest from among the manufacturing equipment (ME) constructed in the virtual factory, thereby intensively carrying out learning on the manufacturing equipment (ME) of interest. In the free mode, when the user moves the operation icon to the manufacturing equipment (ME) of interest, the identification tag (TG) for the manufacturing equipment (ME) of interest can be output to the display device 130. When the user selects the identification tag (TG) via the input device 110, the content for the manufacturing equipment (ME) of interest can be executed.

According to the learning system 100 for secondary battery manufacturing in exemplary aspects, the free mode of the simulation device 120 can provide a virtual environment in which the user can freely move within the virtual factory - where the manufacturing equipment (ME) are installed - and actively experience and learn about the manufacturing equipment (ME). In the free mode of the simulation device 120, the user can selectively and intensively study content associated with manufacturing equipment (ME) of interest, thereby improving learning efficiency.

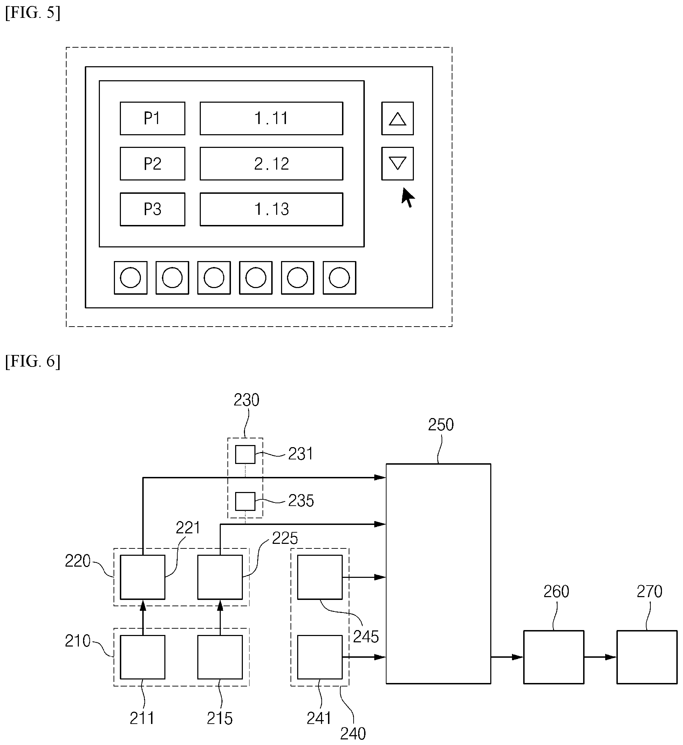

FIG. 5 is a diagram exemplarily illustrating a screen of the display device 130 displaying an HMI associated with manufacturing equipment (ME), in the learning system 100 for secondary battery manufacturing according to exemplary aspects.

Referring to FIGS. 1 to 5, the simulation device 120 can output to the display device 130 a video of the HMI for controlling the operation of the manufacturing equipment (ME). The content associated with the manufacturing equipment (ME) provided by the simulation device 120 can provide an HMI for inputting process parameters (P1, P2, P3) related to the operation of the manufacturing equipment (ME). The HMI may be a virtual-space instantiation of the actual HMI provided in the actual manufacturing equipment (ME). The user can manipulate the HMI provided in the content to control the operation of the manufacturing equipment (ME).

In exemplary aspects, in the free mode of the simulation device 120, the content provided by the simulation device 120 can output to the display device 130 a video of the HMI for inputting process parameters (P1, P2, P3) related to the operation of the manufacturing equipment (ME) selected by user input from among the plurality of manufacturing equipment (ME), and the content can proceed in accordance with the process parameter values input to the HMI via the user input signal.

### (Second aspect)

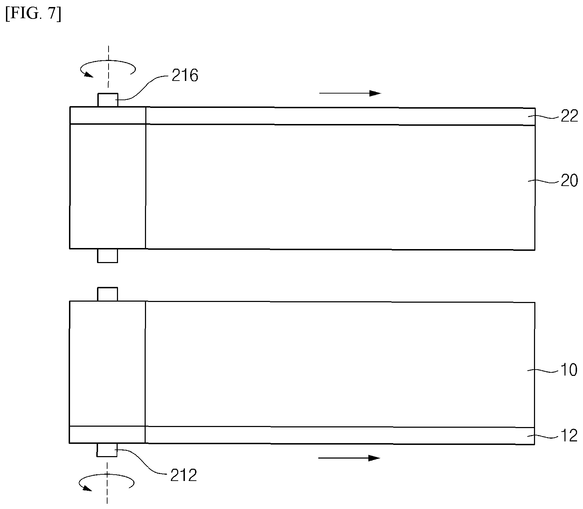

FIG. 6 is a configuration diagram schematically illustrating a virtual factory constructed by the simulation device 120 of the learning system 100 for secondary battery manufacturing according to exemplary aspects. In FIG. 6, the direction of movement of the first electrode 10, the second electrode 20, the first separator 31, the second separator 33, or the electrode assembly JR is indicated by arrows. FIGS. 7 to 14 are diagrams for explaining contents provided by the simulation device 120 of the learning system 100 for secondary battery manufacturing.

Referring to FIGS. 6 to 14, the simulation device 120 can construct, in the virtual factory, a plurality of manufacturing equipment configured to cooperate with one another to perform a manufacturing process for a jelly-roll type electrode assembly (JR). The plurality of manufacturing equipment may include electrode supply equipment 210, notching equipment 220, vision inspection equipment 230, separator supply equipment 240, winding equipment 250, taping equipment 260, and unloading equipment 270.

Referring to FIG. 7, the electrode supply equipment 210 can perform an electrode supply process for supplying the first electrode 10 and the second electrode 20. One of the first electrode 10 and the second electrode 20 is the negative electrode, and the other is the positive electrode. The negative electrode may include a negative electrode current collector and a negative electrode active material coated on the negative electrode current collector. For example, the negative electrode current collector may include copper, stainless steel, aluminum, nickel, titanium, baked carbon, and aluminum-cadmium alloy. For example, the negative electrode active material may include carbon such as non-graphitizable carbon or graphite-based carbon. The positive electrode may include a positive electrode current collector and a positive electrode active material coated on the positive electrode current collector. For example, the positive electrode current collector may include stainless steel, nickel, titanium, baked carbon, and aluminum. For example, the positive electrode active material may be a lithium transition metal oxide. The first electrode 10 and the second electrode 20 may each have a sheet form. The electrode supply equipment 210 may include first electrode supply equipment 211 for supplying the first electrode 10 and second electrode supply equipment 215 for supplying the second electrode 20.

The simulation device 120 can provide content associated with the electrode supply equipment 210. The content associated with the electrode supply equipment 210 may include an electrode replacement operation for loading a new first electrode 10 onto the first unwinder 212, an operation for unwinding the first unwinder 212 so that the first electrode 10 travels along a predetermined path, an electrode replacement operation for loading the second electrode 20 onto the second unwinder 216, and an operation for unwinding the second unwinder 216 so that the second electrode 20 travels along a predetermined path. The operations included in the content associated with the electrode supply equipment 210 may proceed by the user manipulating the HMI output to the display device 130.

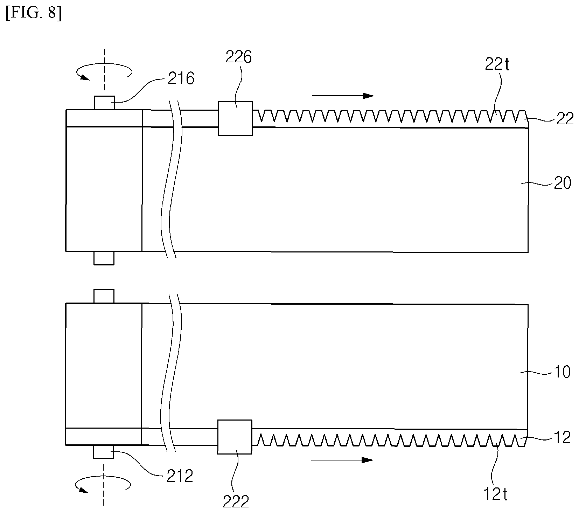

Referring to FIG. 8, the notching equipment 220 can perform a notching process on the first electrode 10 and the second electrode 20. The notching equipment 220 may include first notching equipment 221 configured to notch-process the first electrode 10 to form first electrode tabs 12t in the non-coated part 12 of the first electrode 10, and second notching equipment 225 configured to notch-process the second electrode 20 to form second electrode tabs 22t in the non-coated part 22 of the second electrode 20. The first notching equipment 221 may include a first laser irradiator 222 configured to irradiate a laser beam onto the non-coated part 12 of the first electrode 10 to cut the first electrode 10. The second notching equipment 225 may include a second laser irradiator 226 configured to irradiate a laser beam onto the non-coated part 22 of the second electrode 20 to cut the second electrode 20. The first electrode tabs 12t may be arranged along the longitudinal direction of the first electrode 10 or the direction in which the first electrode 10 moves within the first notching equipment 221. The second electrode tabs 22t may be arranged along the longitudinal direction of the second electrode 20 or the direction in which the second electrode 20 moves within the second notching equipment 225.

The simulation device 120 can provide content associated with the notching equipment 220. The content associated with the notching equipment 220 may include a laser notching operation of reciprocating the first electrode 10 within a certain range in a direction perpendicular to its traveling direction while irradiating a laser beam from the first laser irradiator 222 to cut the first electrode 10, and a laser notching operation of reciprocating the second electrode 20 within a certain range in a direction perpendicular to its traveling direction while irradiating a laser beam from the second laser irradiator 226 to cut the second electrode 20. The operations included in the content associated with the notching equipment 220 may proceed by the user manipulating the HMI output to the display device 130. For example, the user can input, via the HMI output to the display device 130, process parameters for controlling the operation of the first notching equipment 221 and process parameters for controlling the operation of the second notching equipment 225. For example, process parameters for controlling the operation of the first notching equipment 221 may include dimensions of the first electrode tab 12t (e.g., the height of the first electrode tab 12t in the direction perpendicular to the traveling direction of the first electrode 10), the pitch between the first electrode tabs 12t, and the power of the laser beam output from the first laser irradiator 222. For example, process parameters for controlling the operation of the second notching equipment 225 may include dimensions of the second electrode tab 22t (e.g., the height of the second electrode tab 22t in the direction perpendicular to the traveling direction of the second electrode 20), the pitch between the second electrode tabs 22t, and the power of the laser beam output from the second laser irradiator 226.

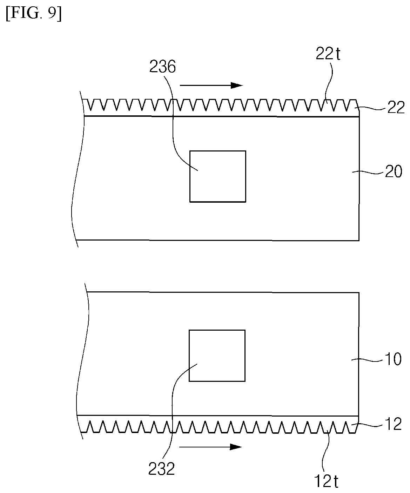

Referring to FIG. 9, the vision inspection equipment 230 can perform a vision inspection process to inspect the appearance of the first electrode 10 and the second electrode 20 that have undergone the notching process. The vision inspection equipment 230 may include first vision inspection equipment 231 configured to inspect the appearance of the first electrode 10 having the first electrode tabs 12t, and second vision inspection equipment 235 configured to inspect the appearance of the second electrode 20 having the second electrode tabs 22t. The first vision inspection equipment 231 may include a vision camera 232 for inspecting the appearance of the first electrode 10, and the second vision inspection equipment 235 may include a vision camera 236 for inspecting the appearance of the second electrode 20. The first vision inspection equipment 231 can photograph the first electrode 10 with the vision camera 232, inspect the dimensions and shape of the first electrode tab 12t based on the image or video obtained by photographing the first electrode 10, and determine whether the dimensions and shape of the first electrode tab 12t satisfy a predetermined reference value. The second vision inspection equipment 235 can photograph the second electrode 20 with the vision camera 236, inspect the dimensions and shape of the second electrode tab 22t based on the image or video obtained by photographing the second electrode 20, and determine whether the dimensions and shape of the second electrode tab 22t satisfy a predetermined reference value.

The simulation device 120 can provide content associated with the vision inspection equipment 230. The content associated with the vision inspection equipment 230 may include an operation of inspecting the appearance of the first electrode 10 with the first vision inspection equipment 231, and an operation of inspecting the appearance of the second electrode 20 with the second vision inspection equipment 235. The operation of inspecting the appearance of the first electrode 10 with the first vision inspection equipment 231 may include inspecting the dimensions and shape of the first electrode tab 12t based on the image or video obtained by photographing the first electrode 10 with the vision camera 232, and determining whether the dimensions and shape of the first electrode tab 12t satisfy a predetermined reference value. The operation of inspecting the appearance of the second electrode 20 with the second vision inspection equipment 235 may include inspecting the dimensions and shape of the second electrode tab 22t based on the image or video obtained by photographing the second electrode 20 with the vision camera 236, and determining whether the dimensions and shape of the second electrode tab 22t satisfy a predetermined reference value. The operations included in the content associated with the vision inspection equipment 230 may proceed by the user manipulating the HMI output to the display device 130.

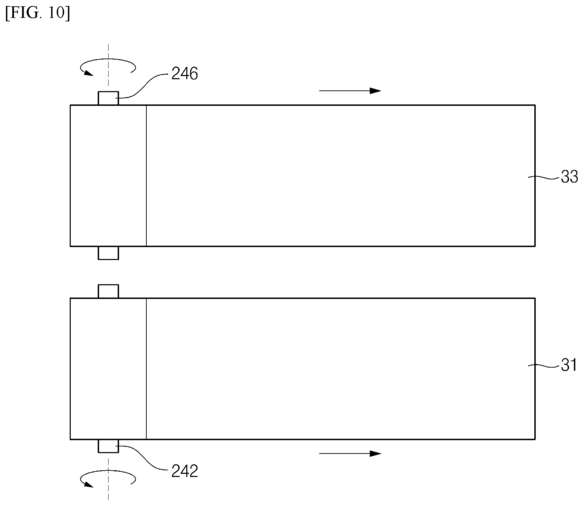

Referring to FIG. 10, the separator supply equipment 240 can perform a separator supply process for supplying the first separator 31 and the second separator 33. The first separator 31 and the second separator 33 may each have a sheet form. The separator supply equipment 240 may include first separator supply equipment 241 for supplying the first separator 31 and second separator supply equipment 245 for supplying the second separator 33.

The simulation device 120 can provide content associated with the separator supply equipment 240. The content associated with the separator supply equipment 240 may include a separator replacement operation for loading a new first separator 31 onto the first separator unwinder 242, an operation for unwinding the first separator unwinder 242 so that the first separator 31 travels along a predetermined path, a separator replacement operation for loading the second separator 33 onto the second separator unwinder 246, and an operation for unwinding the second separator unwinder 246 so that the second separator 33 travels along a predetermined path. The operations included in the content associated with the separator supply equipment 240 may proceed by the user manipulating the HMI output to the display device 130.

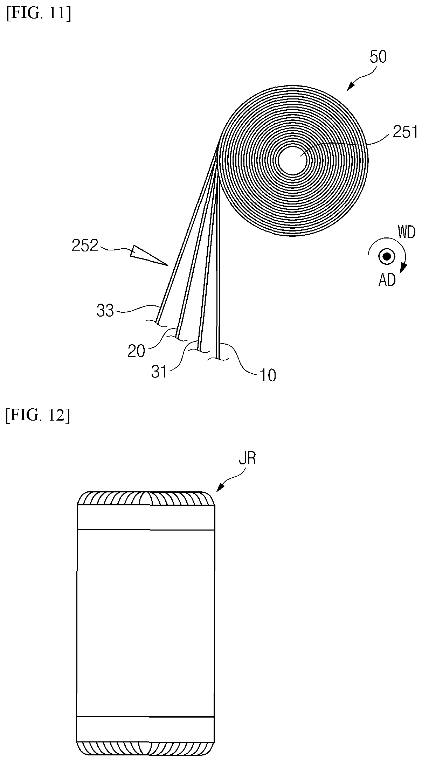

Referring to FIGS. 11 and 12, the winding equipment 250 can perform a winding process of winding, with a winder, a laminate 50 in which the first electrode 10 having the first electrode tabs 12t, the first separator 31, the second electrode 20 having the second electrode tabs 22t, and the second separator 33 are stacked in sequence, thereby manufacturing the jelly-roll type electrode assembly (JR). The winding equipment 250 may include a winding core 251 configured to wind the laminate 50, a feeding part (not shown) for feeding the first electrode 10, the first separator 31, the second electrode 20, and the second separator 33 toward the winding core 251, and a cutter 252 for cutting the first electrode 10, the first separator 31, the second electrode 20, and the second separator 33 between the winding core 251 and the infeed unit. The winding equipment 250 can connect the laminate 50 to the winding core 251 and rotate the winding core 251 in a winding direction (WD) to manufacture the jelly-roll type electrode assembly (JR). The jelly-roll type electrode assembly (JR) may have a form wound around the axial direction (AD) of the winding core 251. In the jelly-roll type electrode assembly (JR) and the laminate 50, two selected from among the first electrode 10, the first separator 31, the second electrode 20, and the second separator 33 may be offset from each other by a predetermined interval in the axial direction (AD) so as to have an alignment offset gap. For example, the first electrode 10 may have an alignment offset gap with respect to the first separator 31, such that the edge of the first electrode 10 in the axial direction (AD) is spaced apart from the edge of the first separator 31 in the axial direction (AD) by a predetermined spacing in the axial direction (AD).

The simulation device 120 can provide content associated with the winding equipment 250. The content associated with the winding equipment 250 may include: an operation of connecting the first electrode 10 having the first electrode tabs 12t, the first separator 31, the second electrode 20 having the second electrode tabs 22t, and the second separator 33 to the winding core 251; an operation of rotating the winding core 251 in the winding direction (WD) to manufacture the jelly-roll type electrode assembly (JR) in which the laminate 50 - comprising the first electrode 10, the first separator 31, the second electrode 20, and the second separator 33 stacked in sequence - is wound; an operation of cutting, with the cutter 252, the first electrode 10, the first separator 31, the second electrode 20, and the second separator 33 that have not been fed into the winding core 251; and an operation of separating the jelly-roll type electrode assembly (JR) from the winding core 251. The operations included in the content associated with the winding equipment 250 may proceed by the user manipulating the HMI output to the display device 130. For example, the user can input, via the HMI output to the display device 130, alignment offset gaps between two selected from among the first electrode 10, the first separator 31, the second electrode 20, and the second separator 33.

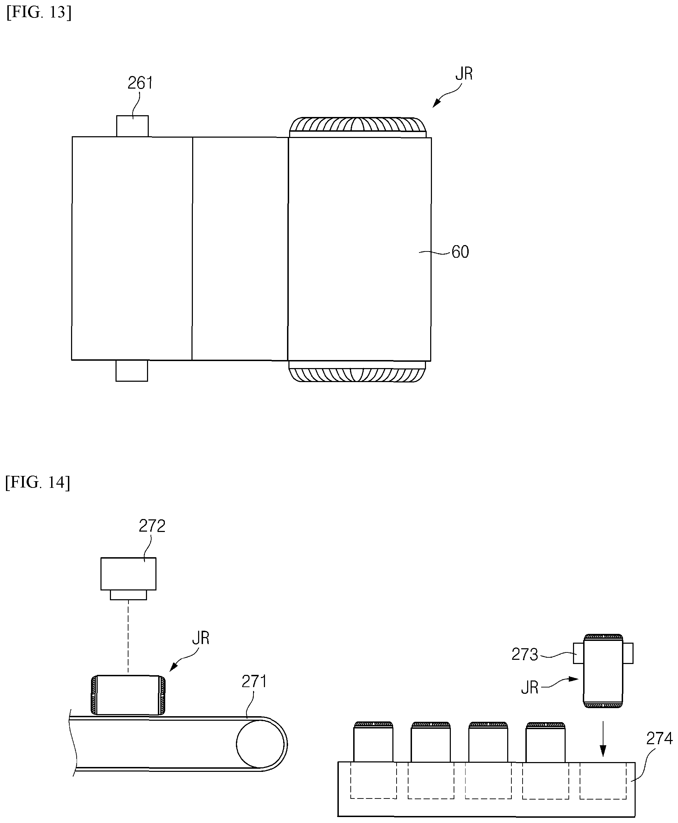

Referring to FIG. 13, the taping equipment 260 can attach a tape 60 to the outer surface of the jelly-roll type electrode assembly (JR). The taping equipment 260 may include a tape feeder 261 for supplying the tape 60. For example, the taping equipment 260 can attach the tape 60 to the jelly-roll type electrode assembly (JR) to surround the outer surface of the jelly-roll type electrode assembly (JR) supported on the winding core 251 (251 in FIG. 11) while the jelly-roll type electrode assembly (JR) is supported on the winding core 251.

The simulation device 120 can provide content associated with the taping equipment 260. The content associated with the taping equipment 260 may include an operation of supplying the tape 60 from the tape feeder 261 and attaching the tape 60 to the jelly-roll type electrode assembly (JR) so as to surround the outer surface of the jelly-roll type electrode assembly (JR) supported on the winding core 251.

Referring to FIG. 14, the unloading equipment 270 can load the jelly-roll type electrode assembly (JR) with the tape 60 attached thereto onto a tray 274. The unloading equipment 270 may include a conveyor part 271 for transferring the jelly-roll type electrode assembly (JR) for which the taping process has been completed in the taping equipment 260, an inspection part 272 for inspecting the jelly-roll type electrode assembly (JR) being transferred along the conveyor part 271, and a loading unit 273 for loading the jelly-roll type electrode assembly (JR) transferred via the conveyor part 271 onto the tray 274.

The simulation device 120 can provide content associated with the unloading equipment 270. The content associated with the unloading equipment 270 may include: an operation of transferring, with the conveyor part 271, the jelly-roll type electrode assembly (JR) for which the taping process has been completed in the taping equipment 260; an operation of inspecting, with the inspection part 272, the jelly-roll type electrode assembly (JR) being transferred along the conveyor part 271; and an operation of loading, with the loading unit 273, the jelly-roll type electrode assembly (JR) transferred via the conveyor part 271 onto the tray 274. In the operation of inspecting the jelly-roll type electrode assembly (JR), the inspection part 272 can photograph the jelly-roll type electrode assembly (JR) with a vision camera, and inspect the appearance of the jelly-roll type electrode assembly (JR) based on the image or video obtained by photographing the jelly-roll type electrode assembly (JR) with the vision camera.

According to the learning system 100 for secondary battery manufacturing in exemplary aspects, the simulation device 120 can construct, in the virtual factory, a plurality of manufacturing equipment configured to perform the manufacturing process for the jelly-roll type electrode assembly (JR), and can provide a virtual environment in which the user can freely move within the virtual factory and actively experience and learn about the manufacturing equipment. In the free mode of the simulation device 120, the user can selectively and intensively study content associated with manufacturing equipment of interest, thereby improving learning efficiency with respect to the manufacturing process for the jelly-roll type electrode assembly.

### (Third aspect)

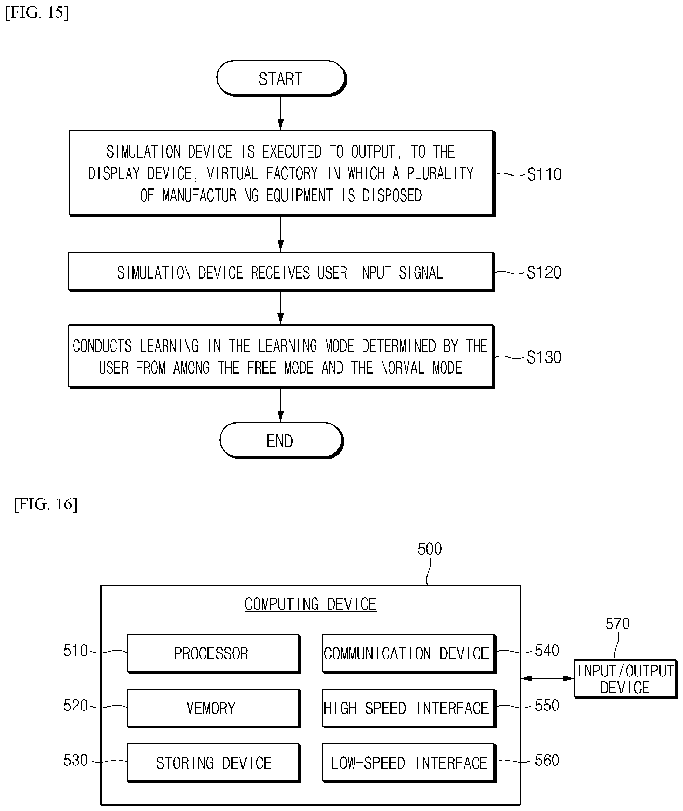

FIG. 15 is a flowchart illustrating a learning method for secondary battery manufacturing according to exemplary aspects. Hereinafter, an exemplary learning method for secondary battery manufacturing using the learning system 100 for secondary battery manufacturing described above will be described.

Referring to FIG. 15, the simulation device 120 is executed to output, to the display device 130, a virtual factory in which a plurality of manufacturing equipment configured to perform secondary battery manufacturing processes are arranged (S110).

The input device 110 generates a user input signal based on the input of the user, and the simulation device 120 receives the user input signal transmitted from the input device 110 (S120). The simulation device 120 can change the area of the virtual factory displayed on the display device 130 based on the user input signal, and can execute simulation-based content.

The simulation device 120 conducts learning on the plurality of manufacturing equipment in the learning mode determined by the user from among the free mode and the normal mode (S130). In step S130, the simulation device 120 provides the free mode and the normal mode to the user, and conducts learning in the learning mode selected from among the free mode and the normal mode based on the user input signal.

In the normal mode, the simulation device 120 can execute a plurality of contents associated with the plurality of manufacturing equipment in a predetermined order.

In the free mode, the simulation device 120 outputs, to the display device 130, content associated with the manufacturing equipment selected by the user input signal from among the plurality of manufacturing equipment. In the free mode, the simulation device 120 allows the operation icon moving in accordance with the user input signal to freely move within the virtual factory, and allows the operation icon to approach all of the plurality of manufacturing equipment. In the free mode, the simulation device 120 displays, on the screen of the display device 130, the identification tag (TG) of the manufacturing equipment that the operation icon approaches when the operation icon approaches any one of the plurality of manufacturing equipment, and when the user selects the identification tag (TG) of the manufacturing equipment, the content for the manufacturing equipment is selectively executed.

In exemplary aspects, the learning method for secondary battery manufacturing can provide the user with content on the manufacturing process for the jelly-roll type electrode assembly (JR). The learning method for secondary battery manufacturing may include content for the electrode supply equipment 210, content for the notching equipment 220, content for the vision inspection equipment 230, content for the separator supply equipment 240, content for the winding equipment 250, content for the taping equipment 260, and content for the unloading equipment 270, as described with reference to FIGS. 6 to 14.

FIG. 16 is a block diagram illustrating an exemplary computing device 500 constituting the learning system 100 for secondary battery manufacturing according to exemplary aspects.

Referring to FIG. 16, the computing device 500 may be instantiated using hardware and/or software configured to interact with a user. The computing device 500 may include the simulation device (100 in FIG. 1) described above. The computing device 500 may include, but is not limited to, a laptop, a desktop, a workstation, a personal digital assistant, a server, a blade server, a mainframe, and the like. The components of the computing device 500 described above, their connections, and their functions are intended to be illustrative and are not intended to limit instantiation of the invention described and/or claimed herein.

The computing device 500 includes a processor 510, a memory 520, a storing device 530, a communication device 540, a high-speed interface 550 connected to the memory 520 and a high-speed expansion port, and a low-speed interface 560 connected to a low-speed bus and the storing device 530. Each of the components 510, 520, 530, 540, 550, 560 may be interconnected using various buses, and may be mounted on the same main board or mounted and connected in other appropriate ways. The processor 510 may be configured to process instructions of a computer program by performing basic arithmetic, logic, and input/output operations. For example, the processor 510 can process instructions and/or data stored in the memory 520, the storing device 530, etc., and/or instructions executed within the computing device 500, to display graphical information on an input/output device 570 such as a display device coupled to the high-speed interface 550.

The communication device 540 can provide a configuration or function for the input/output device 570 and the computing device 500 to communicate with each other through a network, and can provide a configuration or function for the input/output device 570 and/or the computing device 500 to communicate with other external devices. For example, a request or data generated by a processor of an external device according to arbitrary program code may be transmitted to the computing device 500 through a network under the control of the communication device 540. Conversely, a control signal or instruction provided under the control of the processor 510 of the computing device 500 may be transmitted to another external device through the communication device 540 and the network.

Although the computing device 500 is shown in FIG. 16 as including one processor 510, one memory 520, and the like, the computing device 500 is not limited thereto, and may be instantiated using a plurality of memories, a plurality of processors, and/or a plurality of buses. In addition, although FIG. 16 describes a single computing device 500 as existing, the computing device 500 is not limited thereto, and a plurality of computing devices may interact with each other and perform the operations necessary to execute the methods described above.

The memory 520 can store information within the computing device 500. In exemplary aspects, the memory 520 may be configured as a volatile memory unit or a plurality of memory units. Additionally or alternatively, the memory 520 may be configured as a non-volatile memory unit or a plurality of memory units. The memory 520 may also be configured as another type of computer-readable medium such as a magnetic disk or optical disk. The memory 520 may store an operating system and at least one program code and/or instructions.

The storing device 530 may be one or more mass storing devices for storing data for the computing device 500. For example, the storing device 530 may be a computer-readable medium including or configured to include a hard disk, a magnetic disk such as a removable disk, an optical disk, semiconductor memory devices such as an EPROM (Erasable Programmable Read-Only Memory), EEPROM (Electrically Erasable PROM), flash memory devices, CD-ROM and DVD-ROM disks, and the like. Additionally, computer programs may be tangibly instantiated on such computer-readable media.

The high-speed interface 550 and the low-speed interface 560 may be means for interaction with the input/output device 570. In the input/output device 570, the input device may include the input device 110 of FIG. 1, and the output device may include the display device 130 of FIG. 1. The input device may include devices such as a camera including an audio sensor and/or an image sensor, a keyboard, a microphone, and a mouse, and the output device may include devices such as a display, a speaker, and a haptic feedback device. In some aspects, the high-speed interface 550 and the low-speed interface 560 may be means for interfacing with a device, such as a touch screen, in which configurations or functions for performing input and output are integrated into one.

In exemplary aspects, the high-speed interface 550 manages bandwidth-intensive operations for the computing device 500, while the low-speed interface 560 manages bandwidth-intensive operations that are lower than the high-speed interface 550; however, this assignment of functions is merely exemplary. In exemplary aspects, the high-speed interface 550 may be coupled to the memory 520, the input/output device 570, and high-speed expansion ports capable of accommodating various expansion cards (not shown). The low-speed interface 560 may also be coupled to the storing device 530 and a low-speed expansion port. Additionally, a low-speed expansion port, which may include various communication ports (e.g., USB, Bluetooth, Ethernet, wireless Ethernet), may be coupled to one or more input/output devices 570, such as a keyboard, a pointing device, a scanner, or to a networking device such as a router or switch via a network adapter.

The computing device 500 may be instantiated in many different forms. For example, the computing device 500 may be implemented as a standard server or as a group of such standard servers. Additionally or alternatively, the computing device 500 may be instantiated as part of a rack server system or as a personal computer such as a laptop computer. In this case, components from the computing device 500 may be combined with other components within any mobile device (not shown). Such a computing device 500 may include one or more other computing devices or may be configured to communicate with one or more other computing devices.

Although the input/output device 570 is illustrated in FIG. 16 as not being included in the computing device 500, the present disclosure is not limited thereto, and it may be configured as a single device together with the computing device 500. Also, although the high-speed interface 550 and/or the low-speed interface 560 are illustrated in FIG. 16 as elements configured separately from the processor 510, the present disclosure is not limited thereto, and the high-speed interface 550 and/or the low-speed interface 560 may be configured to be included in the processor.

The above-described methods and/or various aspects may be instantiated in digital electronic circuits, computer hardware, firmware, software, and/or combinations thereof. The various aspects of the present disclosure may be implemented in a data processing apparatus, for example, by one or more programmable processors and/or one or more computing devices, or as a computer program stored on a computer-readable medium and/or a computer-readable medium. The above-described computer program may be written in any form of programming language, including compiled or interpreted languages, and may be distributed in any form, such as a standalone program, a module, a subroutine, or the like. The computer program may be distributed via one computing device, a plurality of computing devices connected through the same network, and/or a plurality of computing devices distributed to be connected through a plurality of different networks.

The above-described methods and/or various aspects may be performed by one or more processors configured to execute one or more computer programs that process, store, and/or manage any function, procedure, etc., by operating on input data or generating output data. For example, the methods and/or various aspects of the present disclosure may be performed by special-purpose logic circuits, such as FPGAs (Field Programmable Gate Arrays) or ASICs (Application Specific Integrated Circuits), and devices and/or systems for performing the methods and/or aspects of the present disclosure may be implemented as special-purpose logic circuits such as FPGAs or ASICs.

One or more processors executing a computer program may include general-purpose or special-purpose microprocessors and/or one or more processors of any type of digital computing device. Processors may receive instructions and/or data from read-only memory, random access memory, or both. The components of a computing device for performing the methods and/or aspects of the present disclosure may include one or more processors for executing instructions, and one or more memories for storing instructions and/or data.

In exemplary aspects, the computing device may send and receive data to and from one or more mass storing devices for storing data. For example, the computing device may receive data from, and/or transmit data to, a magnetic disk or optical disk. Computer-readable media suitable for storing instructions and/or data associated with a computer program may include any form of non-volatile memory including, but not limited to, semiconductor memory devices such as EPROM (Erasable Programmable Read-Only Memory), EEPROM (Electrically Erasable PROM), and flash memory devices. For example, computer-readable media may include magnetic disks such as internal hard disks or removable disks, magnetooptical disks, CD-ROM and DVD-ROM disks.

To provide interaction with a user, the computing device may include a display device (e.g., a CRT (Cathode Ray Tube), LCD (Liquid Crystal Display), etc.) for providing or displaying information to the user, and a pointing device (e.g., a keyboard, a mouse, a trackball, etc.) through which the user can provide input and/or commands to the computing device, but is not limited thereto. That is, the computing device may further include any other type of device for providing interaction with a user. For example, the computing device can provide any form of sensory feedback to the user, including visual feedback, audio feedback, and/or tactile feedback, for interaction with the user. In response, the user can provide input to the computing device through various gestures such as visual, voice, and motion.

In the present disclosure, various aspects may be instantiated in a computing device including a back-end component (e.g., a data server), a middleware component (e.g., an application server), and/or a front-end component. In this case, the components may be interconnected by any form or medium of digital data communication, such as a communication network. In exemplary aspects, the communication network may be configured as a wired network such as Ethernet, Power Line Communication, telephone line communication devices, and RS-serial communication, a wireless network such as a mobile communication network, WLAN (Wireless LAN), Wi-Fi, Bluetooth, and ZigBee, or a combination thereof. For example, the communication network may include a LAN (Local Area Network), a WAN (Wide Area Network), and the like.

A computing device based on the exemplary aspects described herein may be instantiated using hardware and/or software configured to interact with a user, including a user device, a user interface (UI) device, a user terminal, or a client device. For example, the computing device may include a portable computing device such as a laptop computer. Additionally or alternatively, the computing device may include, but is not limited to, PDAs (Personal Digital Assistants), tablet PCs, game consoles, wearable devices, IoT (Internet of Things) devices, VR (virtual reality) devices, AR (augmented reality) devices, and the like. The computing device may further include other types of devices configured to interact with a user. The computing device may also include a portable communication device (e.g., a mobile phone, a smartphone, a wireless cellular phone, etc.) suitable for wireless communication through a network such as a mobile communication network. The computing device may be configured to communicate wirelessly with a network server using wireless communication technologies and/or protocols such as Radio Frequency (RF), Microwave Frequency (MWF), and/or Infrared Ray Frequency (IRF).

Although the present disclosure has been described in more detail through drawings and aspects, it should be understood that the configurations shown in the drawings or aspects described in the present specification are merely one aspect of the present disclosure and do not represent all of the technical spirit of the present disclosure, and therefore various equivalents and modifications that can replace them at the time of filing of this application may exist.

## Claims

1. A learning system for secondary battery manufacturing, comprising:
a simulation device configured to construct a virtual factory in which a plurality of manufacturing equipment configured to perform secondary battery manufacturing processes are disposed, and to output the virtual factory to a display device; and
an input device configured to transmit a user input signal generated based on an input of a user to the simulation device, wherein
the simulation device is configured to change a position of the virtual factory displayed on the display device in accordance with the user input signal, and to output, to the display device, content associated with a manufacturing equipment selected by the user input signal from among the plurality of manufacturing equipment.

2. The learning system for secondary battery manufacturing of claim 1, wherein
the simulation device is configured to instantiate, on a screen of the display device, an operation icon that moves in accordance with the user input signal,
the simulation device provides a Free mode and a Normal mode, wherein
in the Free mode, the simulation device is configured to allow the operation icon moving in accordance with the user input signal to approach all of the plurality of manufacturing equipment, to display, on the screen of the display device, an identification tag of a manufacturing equipment that the operation icon has approached when the operation icon approaches any one of the plurality of manufacturing equipment, and to output, to the display device, content associated with the manufacturing equipment selected by the user input signal from among the plurality of manufacturing equipment, and
in the Normal mode, the simulation device is configured to output a plurality of contents associated with the plurality of manufacturing equipment to the display device in a predetermined order.

3. The learning system for secondary battery manufacturing of claim 1, wherein
the content for the manufacturing equipment selected from among the plurality of manufacturing equipment is configured to output, to the display device, a video of a Human-Machine Interface (HMI) for inputting process parameters related to the operation of the manufacturing equipment.

4. The learning system for secondary battery manufacturing of claim 1, wherein
the plurality of manufacturing equipment is configured to cooperate with one another to perform a manufacturing process for a jelly-roll type electrode assembly, and
the simulation device comprises a content storing part that stores a plurality of contents associated with the plurality of manufacturing equipment, and is configured to execute content associated with the manufacturing equipment selected by the user input signal from among the plurality of manufacturing equipment.

5. The learning system for secondary battery manufacturing of claim 4, wherein
the plurality of contents comprises content for an electrode supply equipment configured to load a first electrode onto a first unwinder and load a second electrode onto a second unwinder.

6. The learning system for secondary battery manufacturing of claim 4, wherein
the plurality of contents comprises content for a notching equipment configured to form a plurality of first electrode tabs in a non-coated part of the first electrode and form a plurality of second electrode tabs in a non-coated part of the second electrode.

7. The learning system for secondary battery manufacturing of claim 4, wherein
the plurality of contents comprises content for a vision inspection equipment configured to inspect the appearance of the first electrode having the plurality of first electrode tabs and to inspect the appearance of the second electrode having the plurality of second electrode tabs.

8. The learning system for secondary battery manufacturing of claim 4, wherein
the plurality of contents comprises content for a separator supply equipment configured to load a first separator onto a third unwinder and load a second separator onto a fourth unwinder.

9. The learning system for secondary battery manufacturing of claim 4, wherein
the plurality of contents comprises content for a winding equipment configured to wind a laminate in which a first electrode having a plurality of first electrode tabs, a first separator, a second electrode having a plurality of second electrode tabs, and a second separator are stacked in sequence, thereby manufacturing a jelly-roll type electrode assembly.

10. The learning system for secondary battery manufacturing of claim 4, wherein
the plurality of contents comprises content for a taping equipment configured to attach a tape to an outer surface of a jelly-roll type electrode assembly in which a laminate comprising a first electrode having a plurality of first electrode tabs, a first separator, a second electrode having a plurality of second electrode tabs, and a second separator stacked in sequence has been wound.

11. The learning system for secondary battery manufacturing of claim 4, wherein
the plurality of content contents comprises content for an unloading equipment configured to load a jelly-roll type electrode assembly - in which a laminate comprising a first electrode having a plurality of first electrode tabs, a first separator, a second electrode having a plurality of second electrode tabs, and a second separator stacked in sequence has been wound - onto a tray.

12. The learning system for secondary battery manufacturing of claim 1, wherein
the simulation device provides a plurality of contents associated with the plurality of manufacturing equipment, wherein
the plurality of contents comprises:
content for an electrode supply equipment configured to load a first electrode onto a first unwinder and load a second electrode onto a second unwinder;
content for a notching equipment configured to form a plurality of first electrode tabs in a non-coated part of the first electrode and form a plurality of second electrode tabs in a non-coated part of the second electrode;
content for a vision inspection equipment configured to inspect the appearance of the first electrode having the plurality of first electrode tabs and to inspect the appearance of the second electrode having the plurality of second electrode tabs;
content for a separator supply equipment configured to load a first separator onto a third unwinder and load a second separator onto a fourth unwinder;
content for a winding equipment configured to wind a laminate in which the first electrode having the plurality of first electrode tabs, the first separator, the second electrode having the plurality of second electrode tabs, and the second separator are stacked in sequence, thereby manufacturing a jelly-roll type electrode assembly;
content for a taping equipment configured to attach a tape to an outer surface of the jelly-roll type electrode assembly; and
content for an unloading equipment configured to load the jelly-roll type electrode assembly onto a tray, wherein
the simulation device provides a Free mode and a Normal mode, wherein
in the Free mode, the simulation device is configured to output, to the display device, content selected by the user input signal from among the plurality of contents, and
in the Normal mode, the simulation device is configured to output the plurality of contents to the display device in a predetermined order.

13. The learning system for secondary battery manufacturing of claim 1, wherein
the simulation device comprises a memory configured to store at least one instruction, and a processor configured to execute the at least one instruction stored in the memory.

14. A learning method for secondary battery manufacturing, comprising:
executing a simulation device to output, to a display device, a virtual factory in which a plurality of manufacturing equipment configured to perform secondary battery manufacturing processes are disposed; and
conducting learning on the plurality of manufacturing equipment based on a user input signal generated based on an input of a user, wherein
conducting learning comprises: changing a position of the virtual factory displayed on the display device in accordance with the user input signal; and outputting, to the display device, content associated with a manufacturing equipment selected by the user input signal from among the plurality of manufacturing equipment.

15. The learning method for secondary battery manufacturing of claim 14, further comprising:
selecting either the Free mode or the Normal mode, wherein
in the Free mode, the simulation device is configured to allow an operation icon moving on the screen of the display device in accordance with the user input signal to approach all of the plurality of manufacturing equipment, to display, on the screen of the display device, an identification tag of a manufacturing equipment that the operation icon has approached when the operation icon approaches any one of the plurality of manufacturing equipment, and to output, to the display device, content associated with the manufacturing equipment selected by the user input signal from among the plurality of manufacturing equipment, and
in the Normal mode, the simulation device is configured to output a plurality of contents associated with the plurality of manufacturing equipment to the display device in a predetermined order.

16. The learning method for secondary battery manufacturing of claim 14, wherein
the simulation device provides a plurality of contents associated with the plurality of manufacturing equipment, wherein
the plurality of contents comprises:
content for an electrode supply equipment configured to load a first electrode onto a first unwinder and load a second electrode onto a second unwinder;
content for a notching equipment configured to form a plurality of first electrode tabs in a non-coated part of the first electrode and form a plurality of second electrode tabs in a non-coated part of the second electrode;
content for a vision inspection equipment configured to inspect the appearance of the first electrode having the plurality of first electrode tabs and to inspect the appearance of the second electrode having the plurality of second electrode tabs;
content for a separator supply equipment configured to load a first separator onto a third unwinder and load a second separator onto a fourth unwinder;
content for a winding equipment configured to wind a laminate in which the first electrode having the plurality of first electrode tabs, the first separator, the second electrode having the plurality of second electrode tabs, and the second separator are stacked in sequence, thereby manufacturing a jelly-roll type electrode assembly;
content for a taping equipment configured to attach a tape to an outer surface of the jelly-roll type electrode assembly; and
content for an unloading equipment configured to load the jelly-roll type electrode assembly onto a tray.
